# EUROPÄISCHE PATENTANMELDUNG

(11) **EP 0 872 379 A2**
(43) Veröffentlichungstag der Anmeldung: **21.10.1998**
(21) Anmeldenummer: 98106664.0
(22) Anmeldetag: 11.04.1998
(51) Int. Cl.: B60Q 1/38

(54) **Schaltungsanordnung für flexible Ansteuerung der Blinkleuchten an Kraftfahrzeugen**

(30) Priorität: 19.04.1997 DE 19716485
(71) Anmelder: Elektronik Service Weimann, 04207 Leipzig (DE)
(72) Erfinder: Lange, Michael, 04318 Leipzig (DE); Müller, Marco, 06231 Bad Dürrenberg (DE)

(57) **Zusammenfassung**

Schaltungsanordnung für flexible Ansteuerung der Blinkleuchten an Kraftfahrzeugen, deren Besonderheit darin besteht, daß ein Blinken mit unterschiedlicher Frequenz - in Abhängigkeit davon, ob ein Fahrtrichtungswechsel oder ein Warnblinken signalisiert werden soll - ermöglicht wird. Das Wesen der Erfindung besteht darin, daß ein Ein-Chip-Mikrorechner (50) im Zusammenwirken mit weiteren elektronischen Bausteinen die jeweils spezielle Signalgebung der Blinklampen (17,18,19,20,21,22,23,24) steuert.

## Beschreibung

Die Erfindung wird angewendet bei Kraftfahrzeugen, die mit einer den Fahrtrichtungswechsel anzeigenden sowie das Warnblinken signalisierenden Blinkanlage ausgerüstet sind.
Die Erfindung betrifft die für eine derartige Blinkanlage zu entwickelnde Schaltungsanordnung, deren Besonderheit darin besteht, daß durch dieselbe ein Blinken mit unterschiedlicher Frequenz - in Abhängigkeit davon, ob ein Fahrtrichtungswechsel oder ein Warnblinken signalisiert werden soll - ermöglicht wird.
Die Erfindung gestattet einen Wechsel zwischen Warnblinken und Fahrtrichtungsblinken ohne Unterbrechung des gerade stattfindenden Blinkvorganges. Untersuchungen hinsichtlich der Optimierung des Signalbildes des Signalgeberbausteins an Kraftfahrzeugen haben gezeigt, daß die Reaktionszeit des Fahrzeugführers und die bessere Erkennbarkeit von roten Lichtsignalen ganz wesentlich von der Impulsform bzw. durch eine optimalen Ansteuerung positiv beeinflußt werden kann.

Bekannt ist ein Kraftfahrzeug mit Blinkleuchten unterschiedlicher Blinkfrequenz gemäß DE GM 295 08 729.3, betreffend die Anordnung von Bauelementen für eine Blinkanlage gleicher Zielstellung und Zweckbestimmung.
Jedoch wird in diesem Gebrauchsmuster nicht offenbart, in welchem Verhältnis die Hell- und Dunkelphasen sowohl des Warnblinkens als auch des Richtungsblinkens zueinander stehen und durch welche photometrischen Charakteristiken dieselben vorteilhafter Weise gekennzeichnet sein sollten.

Weiterhin läßt die diesem Gebrauchsmuster zugrunde liegende technische Lösung die Vielzahl von Einflüssen und Störgrößen außer acht, so daß eine zuverlässige, den praktischen Verkehrsbedingungen gerecht werdende Auswahl und Anordnung der einzelnen Bauelemente nicht vorgenommen werden kann. Aufgabe der Erfindung ist die Neukonzeption einer

Blinkeinrichtung für Kraftfahrzeuge, indem eine Schaltungsanordnung entwickelt wird, die die Kombination von Warnblinken und Richtungsblinken unter dem Aspekt jeweils unterschiedlicher Blinkfrequenzen vorsieht.
Im Detail handelt es sich dabei um eine Schaltungsanordnung, die ein Ansteuern der Blinkleuchten in der Form bewirkt, daß einerseits eine flexible Gestaltung der Blinkfrequenz und andererseits eine Kontrollsignalgebung, betreffend den Funktionszustand der Blinklampen und der Blinksignalgeber ermöglicht wird.

Dabei sollte für das Warnblinken vorteilhafter Weise ein Doppelblinkimpuls mit 75 plus/minus 15 Perioden pro Minute gewählt werden. Eine jede Periode ist durch zwei Hell- und zwei Dunkelphasen gekennzeichnet, wobei die Zeit für die Hellphase 160 plus/minus 20 Millisekunden und die Zeit für die Dunkelphase 100 plus/minus 20 Millisekunden beträgt. Die Zeitdauer für die die Periode abschließende Dunkelphase beträgt demzufolge 380 plus/minus 80 Millisekunden. Dementsprechend ergibt sich aus den vorstenenden Festlegungen eine Periodendauer von 800 plus/minus 140 Millisekunden. Die photometrische Charakteristik der Hellphase des Lichtsignals sollte ungefähr den bekannten Konditionen entsprechen.

Für das Richtungsblinken wird günstiger Weise die nach dem derzeitiger Stand der Technik übliche Impulsfolge beibehalten, die 90 plus/minus 30 Perioden pro Minute beträgt. Demzufolge weist der Blinkimpuls eine Periodendauer von 750 plus/minus 250 Millisekunden auf, wobei die Periode symmetrisch in eine Hell- und Dunkelphase - jeweils 375 plus/minus 125 Millisekunden - unterteilt wird.

Die Aufgabe der Erfindung ist es schließlich, die Schaltungsanordnung in der Weise zu konzipieren, daß im praktischen Betrieb eines Kraftfahrzeuges alle zu erwartenden Störgrößen und sonstigen Einflüsse weitgehend eliminiert werden. Dazu gehören insbesondere elektrische Störgrößen, klimatische Einflüsse und mechanische Beanspruchungen.
Betreffend die elektrischen Störgrößen, so ist hier Vorsorge zu tragen, daß insbesondere Schwankungen der Betriebsspannung, kurzzeitiges Verpolen und Vertauschen von Leitungen sowie elektromagnetische Einflüsse - beispielsweise leitungsgeführte und eingestrahlte Störgrößen - auf die Funktionssicherheit der Blinkeinrichtung des Kraftfahrzeuges keinen Einfluß gewinnen.
Zu den klimatischen Störgrößen zählen vorrangig die thermische Beanspruchung sowie das Einwirken der Luftfeuchtigkeit.
Als mechanische Störgrößen können Schwankungen des Luftdruckes sowie Schwingungs- und Stoßbeschleunigungen auftreten.

Aufgabe der Erfindung ist es letztendlich, den nationalen und internationalen Normen und Standards der Betriebsbereitschaft und Betriebsdauer gerecht zu werden und die Zuverlässigkeit des Signalgeberbausteins in einer Weise zu erhöhen, die eine kostenerhöhende und zusätzlichen Platz beanspruchende Redudanz desselben überflüssig werden läßt. Dementsprechend muß die Anzahl der Bauelemente und deren Volumen minimiert werden.

Die Aufgabe der Erfindung wird nun dadurch gelöst, daß eine Schaltungsanordnung entwickelt wurde, deren zentraler Baustein durch einen Ein-Chip-Mikrorechner mit einer Festwertspeicherkapazität von mindestens 1,5 kByte und einer RAM-Speicherkapazität von mindestens 250 Byte gebildet wird. Der Ein-Chip-Mikrorechner speichert das Programm der einzelnen Blinkvorgänge (Richtungsblinken und Warnblinken), steuert den Gesamtablauf bzw. überwacht alle Ein- und Ausgangssignale.

Erfindungsgemäß geschieht dies dadurch, daß die über die Blinkschalter generierten elektrischen Impulse einem Ein-Chip-Mikrorechner zugeführt werden, der dann seinerseits das jeweilige Blinkprogramm aktiviert.
Dabei sind in der Weise weitere elektronische Bausteine angeordnet, daß jeweils ein Blinklampenstromtreiber/links und -/rechts sowie vier Kontrollampenstromtreiber (für vier Blinkfunktionen) der Absicherung der Lampenstromkreise (Überhitzungsschutz, Kurzschluß) dienen und die Signale an den Rechner hinsichtlich der Betriebsbereitschaft liefern.

Erfindungsgemäß sind weiterhin Überspannungsschutzbausteine zwischengeschaltet, die die Transiente aus der Bordnetzspannung, aus der Versorgungsspannung bzw. aus den Lampenstromkreisen auf ein 12-Volt-Niveau herausfiltern. Weitere Überspannungsschutzbausteine transformieren die 12-Volt-Signalspannung auf die für den Rechner verwertbare Signalspannung.

Erfindungsgemäß formt weiterhin je ein Meßsignal-Aufbereitungsmodul/links und -/rechts die Meßspannung über einen Meßwiderstand in einen Einheitssignalbereich um.
Ein dualer Festspannungsregler mit Datenübertragungsmodul hat insofern mehrere Aufgaben zu erfüllen, als dieser dem Zweck dient, die Betriebsspannung für den Rechner zur Verfügung zu stellen, eine vom Rechner schaltbare Versorgungsspannung für die Referenzspannungsquelle und den Operationsverstärker zur Verfügung zu stellen sowie die Versorgungsspannung für die Blinkschaltung zu gewährleisten. Weiterhin verfügt dieser Regler über einen seriellen Daten-Ein-und Ausgang für die CAN-BUS-Schnittstelle.

Schließlich ist in die erfinderische Schaltungsanordnung ein Transistor eingefügt, der als Stromtreiber für den akustischen Signalgeber fungiert.

In nachfolgendem Ausführungsbeispiel soll die zweckmäßigste Form der Realisierung der erfinderischen Lösung beschrieben werden:
Zentraler Baustein der Schaltungsanordnung ist ein Ein-Chip-Mikrorechner 50, welcher über eine Festwertspeicherkapazität von mindestens 1,5 kByte und eine RAM-Speicherkapazität von mindestens 250 Byte verfügt und der - abgesichert über ein 5,6-V-Überspannungsschutzmodul mit Tiefpaßfiltercharakteristik 42 - mit dem Blinkschalter/Richtungsblinken-links 14, dem Blinkschalter/Richtungsblinken-rechts 15 und dem Blinkschalter/Warnblinken 16 elektrisch verbunden ist.

Die Blinkschalter 14,15 und der Warnblinkschalter 16 üben dabei die Funktion eines Signalgebers für den Ein-Chip-Mikrorechner 50 aus.
Durch den Ein-Chip-Mikrorechner 50 werden die Blinklampenstrom-Treiberbausteine 32,33, die Kontrollampenstrom-Treiberbausteine 34,35,36,37, der akustische Treiberbaustein 46 sowie die Signalbausteine angesteuert, letztere in Form der Blinklampe,links/vorn 17, der Blinklampe,links/seitlich 18, der Blinklampe,links/hinten 19, der Blinklampe,links/Anhänger 20, der Blinklampe,rechts/Anhänger 24, der Blinklampe,rechts/hinten 23, der Blinklampe,rechts/seitlich 22, der Blinklampe,rechts/vorn 21, der Kontrollampe am Armaturenbrett, Blinken/rechts 26, der Kontrollampe am Armaturenbrett, Blinken/links 25, der Kontrollampe am Armaturenbrett für das Warnblinken 27, der Kontrollampe für den Anhängerbetrieb 28 sowie des akustischen Gebers 47.
Der jeweilige Baustein 38,39 hat die Funktion der Überwachung des Eingangssignals hinsichtlich dessen Art und Größe (beispielsweise Anahl der angeschlossenen Lampen) bzw. hinsichtlich der Sollwertänderungen an den peripheren Signalbausteinen.
Die Überspannungsschutz-Bausteine 29,30,31,41 begrenzen die Transienten, die auf der 12-Voit-Ebene auftreten.
Das Überspannungsschutz-Modul 42 begrenzt die Transienten, die auf der 5-Volt-Ebene auftreten. Das Eingangsmodul Bordnetzspannungsintervall 45 überwacht das Bordspannungsnetz hinsichtlich der Spannungsschwankungen im Bordspannungsnetz, beispielsweise bei Spannungsabfall durch Starten des Fahrzeuges oder beim Auftreten von Spannungsspitzen infolge von Lastabwurf bzw. Abschalten anderer Verbraucher. Der akustische Geber 47 wird in der Weise angesteuert, daß dieser ein akustisches Signal initiiert, wenn durch die Blinklampen 17 bis 24 Blinkimpulse abgegeben werden.
Der akustische Signalgeber 47 bildet mit den Blinkkontrollampen 25,26,27,28 ein redudantes System mit eindeutig unterscheidbarer Kontrollsignalgebung bei voller Funktionstüchtigkeit aller Blinklampen 17 bis 24 und des Blinksignalgebers bzw. im Fehlerfall.

Im einzelnen umfaßt die diesem Ausführungsbeispiel zugrunde liegende Schaltungsanordnung folgende Bausteine bzw. Funktionen:
- Bordnetzspannungs-Anschluß 1
- Masse-Anschluß 2
- Anschluß Spannungsversorgung 3
- Anschluß Blinkschalter "Richtungsblinken/links" 4
- Anschluß Blinkschalter "Richtungsblinken/rechts" 5
- Anschluß Blinkschalter "Warnblinken" 6
- Anschluß Alarmanlage 7
- Anschluß Blinklampen/links 8
- Anschluß Blinklampen/rechts 9
- Anschluß Kontrollampe "Richtungsblinken/links" 10
- Anschluß Kontrollampe "Richtungsblinken/rechts" 11
- Anschluß Kontrollampe "Warnblinkbetrieb" 12
- Anschluß Kontrollampe "Anhängerbetrieb" 13
- Blinkschalter "Richtungsblinken/links" 14
- Blinkschalter "Richtungsblinken/rechts" 15
- Blinkschalter "Warnblinken" 16
- Hauptblinklampe "vorn/links" 17
- Zusatzblinklampe/links 18
- Hauptblinklampe "hinten/links" 19
- Hauptblinklampe "Anhänger/links" 20
- Hauptblinklampe "vorn/rechts" 21
- Zusatzblinklampe/rechts 22
- Hauptblinklampe "hinten/rechts" 23
- Hauptblinklampe "Anhänger/rechts" 24
- Kontrollampe "Richtungsblinken/links" 25
- Kontrollampe "Richtungsblinken/rechts" 26
- Kontrollampe "Warnblinkbetrieb" 27
- Kontrollampe "Anhängerbetrieb" 28
- Übwerspannungsschutzbaustein 29
- Überspannungsschutzbaustein 30
- Überspannungsschutzbaustein 31
- Blinklampenstromtreiber/links 32
- Blinklampenstromtreiber/rechts 33
- Kontrollampenstromtreiber "Richtungsblinken/li" 34
- Kontrollampenstromtreiber "Richtungsblinken/re" 35
- Kontrollampenstromtreiber "Warnblinkbetrieb" 36
- Kontrollampenstromtreiber "Anhängerbetrieb" 37
- Meßsignal-Aufbereitungsmodul/links 38
- Meßsignal-Aufbereitungsmodul/rechts 39
- Dualer Festspannungsreg.m.Datenübertragungsmod. 40
- Überspannungsschutzbaustein 41
- Überspannungsschutzbaustein 42
- Überspannungsschutzbaustein 43
- Überspannungsschutzbaustein 44
- Eingrenzungsmodul Bordnetzspannungsintervall 45
- Treiberbauelement "Akustischer Signalgeber" 46
- Akustischer Signalgeber 47
- Referenzspannungsquelle 48
- Quarz/Quarzosszilator 49
- Ein-Chip-Mikrorechner 50
- Anschluß "Serieller Dateneingang" 51
- Anschluß "Serieller Datenausgang" 52
- CAN-BUS-Modul 53

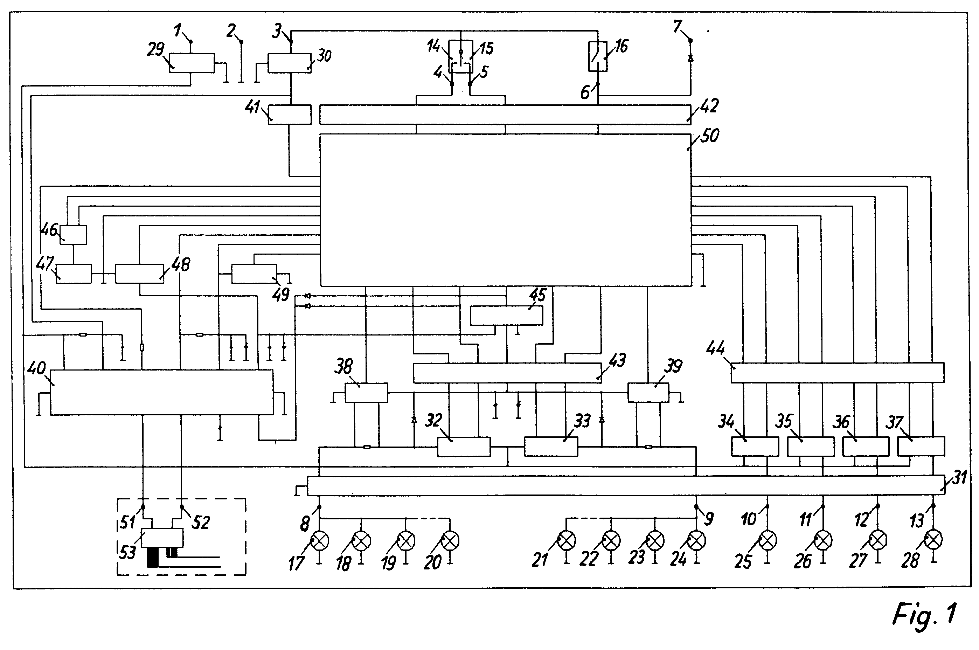

## Patentansprüche

1. Schaltungsanordnung für flexible Ansteuerung der Blinkleuchten an Kraftfahrzeugen, welche in Abhängigkeit davon, ob ein Fahrtrichtungswechsel oder ein Warnblinken signalisiert werden soll, ein Blinken mit unterschiedlicher Frequenz ermöglicht, **dadurch gekennzeichnet**,
- daß ein Ein-Chip-Mikrorechner (1) mit einer Festwertspeicherkapazität von mindestens 1,5 kByte und einer RAM-Speicherkapazität von mindestens 250 Byte in der Weise die Funktion der Blinklampen (17 bis 24) steuert, daß dieser das dazu erforderliche Programm speichert und alle Ein- und Ausgänge überwacht,
- daß beim Auslösen des Warnblinkens mittels des Blinkschalters "Warnblinken" (16) in der Weise ein Doppelblinkimpuls mit 75 plus/minus 15 Perioden initiiert und auf die einzelnen Blinklampen (17 bis 24) übertragen wird, daß eine jede Periode durch zwei Hell- und zwei Dunkelphasen gekennzeichnet ist, wobei die Zeit für die Hellphase 160 plus/minus 20 Millisekunden und die Zeit für die die Periode abschließende Dunkelphase demzufolge 380 plus/minus 80 Millisekunden beträgt Und dementsprechend sich daraus eine Periodendauer von 800 plus/minus 140 Millisekunden ergibt,
- daß für das Richtungsblinken - ausgelöst durch Betätigen des Blinkschalters "Richtungsblinken/links" (14) oder des Blinkschalters "Richtungsblinken/rechts" (15) - die nach dem derzeitigen Stand der Technik übliche Impulsfolge von 90 plus/minus 30 Perioden pro Minute beibehalten wird, wonach der initierte Blinkimpuls eine Periodendauer von 750 plus/minus 250 Millisekunden aufweist und die Periode symmetrisch in eine Hell- und Dunkelphase - entsprechend jeweils 375 plus/minus 125 Millisekunden - unterteilt ist und der Blinkimpuis auf die einzelnen Blinklampen (17,18,19 20 bzw. 21,22,23,24) übertragen wird und
- daß eine Reihe weiterer elektronischer Bausteine, vorzugsweise die Blinklampen- und Kontrollampenstromtreiber (32 bis 37), die Kontrollampen (25, 26,27), die Überspannungsschutzbausteine (29,30, 31,41,42,43,44), die Meßsignal-Aufbereitungsmodule (38,39), der Datenübertragungsmodul (40) sowie das Eingrenzungsmodul "Bordnetzspannungsintervall" (46) schaltungstechnisch zwischen den Blinkschaltern (14,15,16) und den Blinklampen (17 bis 24) angeordnet sind.
